Europäisches Patentamt

European Patent Office

Office européen des brevets

(19)

(11) **EP 0 974 063 B1**

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(51) Int Cl.$^7$: **G01S 1/02**, G01S 5/14

(21) Anmeldenummer: **98922681.6**

(86) Internationale Anmeldenummer:
**PCT/EP98/02106**

(22) Anmeldetag: **09.04.1998**

(87) Internationale Veröffentlichungsnummer:
**WO 98/045723 (15.10.1998 Gazette 1998/41)**

(54) **VERFAHREN ZUR ÜBERPRÜFUNG DER ZUVERLÄSSIGKEIT VON NOMINELLEN POSITIONSBESTIMMUNGEN**

METHOD FOR CHECKING THE RELIABILITY OF NOMINAL POSITION INDICATIONS

PROCEDE POUR CONTROLER LA FIABILITE D'INDICATIONS DE POSITION NOMINALES

(84) Benannte Vertragsstaaten:
**CH DE FR GB LI SE**

(30) Priorität: **10.04.1997 DE 19714985**

(43) Veröffentlichungstag der Anmeldung:
**26.01.2000 Patentblatt 2000/04**

(73) Patentinhaber: **LITEF GmbH**
**79115 Freiburg (DE)**

(72) Erfinder: **BEERHOLD, Jens, Rainer**
**D-79110 Freiburg (DE)**

(74) Vertreter: **Müller - Hoffmann & Partner**
**Patentanwälte,**
**Innere Wiener Strasse 17**
**81667 München (DE)**

(56) Entgegenhaltungen:
**US-A- 5 543 804          US-A- 5 583 774**

- **UPADHYAY T ET AL: "AUTONOMOUS GPS/INS NAVIGATION EXPERIMENT FOR SPACE TRANSFER VEHICLE" IEEE TRANSACTIONS ON AEROSPACE AND ELECTRONIC SYSTEMS, Bd. 29, Nr. 3, 1. Juli 1993, Seiten 772-784, XP000398823**

EP 0 974 063 B1

**Beschreibung**

Die Erfindung betrifft ein Verfahren zur Überprüfung der Zuverlässigkeit von nominellen Positionsbestimmungen, mit spezieller Anwendung auf die Kopplung von Satelliten- und Inertial-Navigationssystemen.

Ein Navigationssystem stellt als wesentliche Ausgangsgrößen die Position und die Geschwindigkeit mit Bezug auf ein vorgegebenes Koordinatensystem bereit. Inertiale Navigationssysteme liefern diese Größen mit hoher Update-Rate und sind nur schwer zu stören, da nur interne Sensoren, aber keine externen Systemkomponenten benötigt werden. Der Nachteil dieser Systeme ist die zeitliche Abnahme ihrer Genauigkeit. Nominelle Navigationssysteme, zum Beispiel Satelliten-Navigationssysteme. erreichen dagegen eine exzellente Langzeitgenauigkeit, sie weisen jedoch nur eine geringe Update-Rate auf und sind sehr störanfällig, da sie auf dem Prinzip der Laufzeitmessung der elektromagnetischen Welle zwischen Satellit und Empfänger beruhen.

Durch die Kopplung beider Systemtypen können die Nachteile der Einzelsysteme eliminiert werden. Dazu werden aus den Ausgangsgrößen beider Systeme Fehlergrößen ermittelt, welche über ein Optimalfilter (in der Regel ein Kalman-Filter) in sogenannte Stützgrößen überführt werden. Diese Stützgrößen werden zur kontinuierlichen Nachführung des Inertialsystems herangezogen.

Da jedoch Satelliten-Navigationssysteme sehr störanfällig sind, ist es für sicherheitskritische Anwendungen unerläßlich, eine Instanz zur Fehlererkennung einzuführen, welche die Ausgangsgrößen des Satelliten-Navigationssystems auf Konsistenz überprüft und entscheidet, ob diese zur Stützung herangezogen werden dürfen.

Zur Positions- und Geschwindigkeitsbestimmung per Satelliten-Navigation ist die Messung und Auswertung von mindestens vier Satelliten-Signalen erforderlich. Soll eine fehlerhafte Messung erkannt werden, erhöht sich die Anzahl der erforderlichen Meßwerte auf mindestens fünf. In der praktischen Anwendung werden jedoch oft sechs und mehr Messungen herangezogen. Diese Meßwerte werden geeignet mathematisch aufbereitet und anschließend einem Hypothesen-Test unterzogen, woraus sich eine statistische Aussage ableiten läßt, ob eine oder mehrere Messungen fehlerbehaftet sind.

Die statistischen Eigenschaften dieses Hypothesen-Tests verbessern sich sprunghaft mit der Anzahl der zur Verfügung stehenden Meßwerte. Aufgrund der mathematischen Eigenschaften der Positionsbestimmung per Satelliten-Navigation lassen sich auch anderweitig ermittelte Positionsbestimmungen in den Hypothesentest einbeziehen und damit die statistische Zuverlässigkeit des Tests erhöhen.

Zur Fehlererkennung werden in der Satelliten-Navigation statistische Verfahren herangezogen, die sich in zwei Klassen unterteilen lassen:

1. Verfahren, die auf Einzelmessungen beruhen,
2. Verfahren, die auf Meßreihen beruhen.

Alle Verfahren, die auf Einzelmessungen beruhen, gehen von der Annahme aus, daß zum jeweiligen Meßzeitpunkt statistisch unabhängige, verrauschte, eventuell fehlerhafte Messungen vorliegen. Die zugrundeliegende Meßgleichung, welche die Beziehung zwischen $n > 4$ zur Verfügung stehenden Messungen und Empfänger-Position bzw. -Geschwindigkeit herstellt, wird durch folgendes lineares, überbestimmtes Gleichungssystem beschrieben:

$$\underline{y} = \underline{G} \cdot \underline{x}_{\text{ist}} + \underline{\varepsilon}$$

wobei der Vektor $\underline{y}$ der Dimension $n \times 1$ die Differenz zwischen gemessener Entfernung (Pseudo-Range) und aufgrund des nominellen Zustandsvektors geschätzter Entfernung beinhaltet, $\underline{x}_{\text{ist}}$ die Abweichung des aus der aktuellen Messung berechneten vierdimensionalen Zustandsvektors (Position bzw. Geschwindigkeit und Offset der Zeitbasis) vom nominellen Wert beschreibt, $\underline{G}$ die linearisierte $n \times 4$ Meßmatrix darstellt und der Vektor $\underline{\varepsilon}$ mit der Dimension $n \times 1$ das Meßrauschen inklusive eventueller Meßfehler beschreibt.

Stellvertretend für die Gruppe aller Verfahren, die auf Einzelmessungen beruhen, wird nachfolgend das Verfahren der Residuen der kleinsten Fehlerquadrate dargestellt. Alle weiteren dieser Verfahren lassen sich hierauf zurückführen oder bedienen sich ähnlicher mathematischer Vorgehensweisen.

Zunächst wird entsprechend dem Verfahren der kleinsten Fehlerquadrate eine Lösung für $\underline{x}$ berechnet.

$$\hat{\underline{x}}_{\text{LS}} = (\underline{G}^{\text{T}}\underline{G})^{-1}\underline{G}^{\text{T}}\underline{y}$$

Darauf aufbauend wird der Erwartungswert für den Meßfaktor y bestimmt.

$$\hat{\underline{y}} = \underline{G} \cdot \hat{\underline{x}}_{LS}$$

Dieser Erwartungswert wird vom tatsächlichen Meßvektor $\underline{y}$ subtrahiert, wodurch der Residuenvektor $\underline{w}$ ermittelt wird.

$$\underline{w} := \underline{y} - \hat{\underline{y}} = (\underline{1} - \underline{G}(\underline{G}^T\underline{G})^{-1}\underline{G}^T)\underline{\varepsilon}$$

Aus diesem Residuenvektor $\underline{w}$ wird durch Multiplikation mit seinem transponiertem Vektor die skalare Testgröße T gebildet:

$$T := \underline{w}^T\underline{w}$$

Es ist bekannt, daß bei gaußverteilten Meßfehlern $\underline{\varepsilon}_i$ die Testgröße T einer Chi-Quadrat-Verteilung mit dem Freiheitsgrad n - 4 gehorcht. Damit kann die Testgröße T einem Chi-Quadrat-Hypothesen-Test unterzogen werden, woraus sich eine statistische Aussage über die zu erwartende Ungenauigkeit des Zustandsvektors treffen läßt. Übersteigt der numerische Wert der Ungenauigkeit eine vorgegebene Schranke S, so wird angenommen, daß die Messung fehlerbehaftet ist.

Es ist bekannt, bei Avionik-Anwendungen die barometrische Höhe P in die Meßgleichung einzubeziehen. Dazu wird die Meßmatrix $\underline{G}$, welche die Richtungskosinus zwischen Empfänger und den n Satelliten enthält, um eine Zeile erweitert:

$$\underline{G}' = \begin{bmatrix} c_{11} & c_{12} & c_{13} & 1 \\ c_{21} & c_{22} & c_{23} & 1 \\ \vdots & \vdots & \vdots & \vdots \\ c_{n1} & c_{n2} & c_{n3} & 1 \\ 0 & 0 & \sigma_{sat}/\sigma_b & 0 \end{bmatrix}.$$

wobei $\sigma_{sat}/\sigma_b$ das Verhältnis des Rauschens der Pseudo-Range-Messungen zum Rauschen des barometrischen Höhenmessers angibt.

Damit erhöht sich ebenfalls die Dimension des Residuenvektors:

$$\underline{w}' = (\underline{y}_1 - \hat{\underline{y}}_1, \underline{y}_2 - \hat{\underline{y}}_2, ..., \underline{y}_n - \hat{\underline{y}}_n, (\underline{y}_{z_b} - \hat{\underline{y}}_z)/(\sigma_b/\sigma_{sat}))^T,$$

wobei $y_{z_b}$ die Differenz zwischen barometrischer und nomineller Höhe bezeichnet und $\underline{y}^{\wedge}_z$ den mittels des Verfahrens der kleinsten Fehlerquadrate berechneten Höhenfehler.

Durch diese Maßnahme wird der Freiheitsgrad der Chi-guadrat-Verteilung von T erhöht, wodurch bei gleichbleibender Anzahl empfangener Satelliten eine Verbesserung der statistischen Eigenschaften des Hypothesen-Tests erreicht wird. Ein weiterer wichtiger Vorteil ist, daß die Durchführbarkeit des Tests auch bei n = 4 verwendbaren Satelliten gewährleistet ist, da die Dimension der neuen Meßmatrix $\underline{G}'$ gleich n + 1 ist.

Die Verfahren zur Fehlererkennung, die auf Meßreihen beruhen, basieren auf einem Algorithmus, der bereits 1965 unter dem Namen "Adaptive Kalman Filtering" bzw. "Multiple Model Estimation Algorithm (MMEA)" veröffentlicht wurde.

Der MMEA verwendet eine Bank von parallel arbeitenden Kalman-Filtern. Jedes dieser Kalman-Filter modelliert alle relevanten Parameter des zu überwachenden Systems und einen zusätzlichen Parameter, welcher einen hypothetischen Fehler beschreibt. Im vorliegenden Anwendungsfall wird für jeden empfangenen Satelliten ein Kalman-Filter eingesetzt, wobei als möglicher Fehler eine zeitlich lineare Verfälschung der Pseudo-Range-Messung angenommen wird. Nach genügend langer Beobachtungszeit kann eine statistische Aussage getroffen werden, ob einer der beobachteten Satelliten tatsächlich fehlerbehaftet ist.

Aus dem US-Patent 5,583,774 ist ein Verfahren zur Überprüfung der Zuverlässigkeit von nominellen Positionsbestimmungen aufgrund von Laufzeitmessungen bekannt. bei dem die Meßredundanz der zur Fehlererkennung zur Verfügung stehenden Meßwerte mit Hilfe inertialer Systeme erhöht wird. Hierbei wird ein Algorithmus eingesetzt, der eine Beobachtungszeit von vorzugsweise 30 Minuten voraussetzt.

Die Nachteile dieser Verfahren liegen vor allem in der notwendigen Beobachtungszeit (Meßzeitraum) ≥ 30 Minuten und dem hohem Implementierungsaufwand.

Der Erfindung liegt die Aufgabe zugrunde, ein Verfahren zur Überprüfung der Zuverlässigkeit von nominellen Positionsbestimmungen anzugeben, durch das die zur Stützung eines Inertialsystems herangezogenen Ausgangsgrößen eines Nominalsystems einfach, kostengünstig und schnell auf Konsistenz überprüft werden können.

Die erfindungsgemäße Lösung dieser Aufgabe ist im Patentanspruch 1 angegeben. Die Unteransprüche haben vorteilhafte Weiterbildungen des Erfindungsgedankens zum Inhalt.

Erfindungsgemäß wird die Meßredundanz der zur Fehlererkennung zur Verfügung stehenden Meßwerte mit Hilfe inertialer Systeme erhöht, indem die Dimension der Meßmatrix $\underline{G}$ des nominellen Systems auf Grundlage dieser Laufzeitmessungen durch Einbeziehung einer oder mehrerer Inertial-Komponenten erhöht wird.

Das erfindungsgemäße Verfahren bietet durch die Einbeziehung der Inertial-Komponenten insbesondere den Vorteil eines Vergleichs der Satelliten-Navigationslösung mit der inertialen Navigationslösung, wobei die Erhöhung der Dimension der Meßmatrix eine wesentliche Steigerung der Verfügbarkeit sowie eine signifikante Verbesserung der statistischen Eigenschaften der Instanz zur Fehlererkennung bewirkt. Da sich die inertialen Komponenten nur stetig ändern können, sind sprunghafte Fehler des Satelliten-Navigationssystems (zum Beispiel hervorgerufen durch Abschattung oder Reflektion) unmittelbar detektierbar. Schleichende Fehler sind weiterhin oberhalb eines festzulegenden Schwellenwerts feststellbar.

Da es sich um ein Verfahren handelt, das auf Einzelmessungen beruht, bleibt auch der Implementierungsaufwand gering.

Weitere Einzelheiten, Merkmale und Vorteile der Erfindung ergeben sich aus der nachfolgenden Beschreibung eines Ausführungsbeispieles anhand der Zeichnung. Die einzige Figur zeigt ein Blockschaltbild eines hybriden Inertial/Satelliten-Navigationssystems.

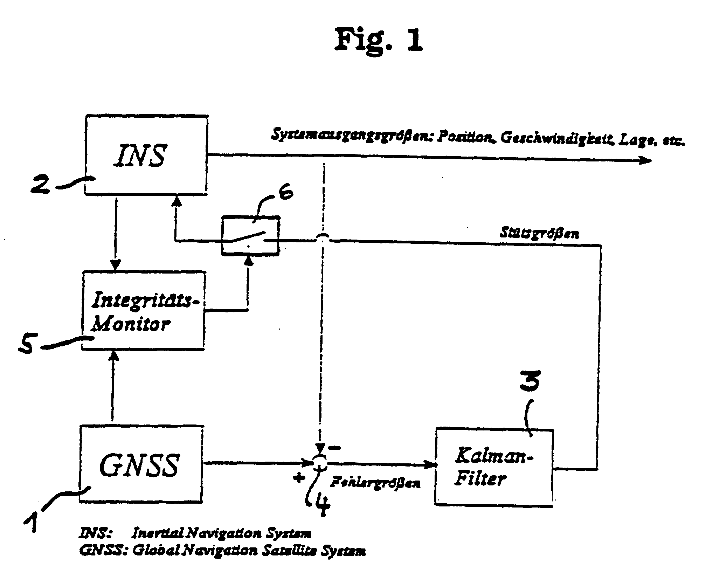

Das in der Figur 1 gezeigte hybride Inertial/Satelliten-Navigationssystem weist ein GNSS (Global Navigation Satellite System) 1 auf, das zur Stützung eines INS (Inertial Navigation System) 2 herangezogen wird. Diese Stützung erfolgt über einen Kalman-Filter 3, der aus der Differenz der Systemausgangsgrößen des GNSS 1 mit den Systemausgangsgrößen des INS 2, die in einem Addierer 4 gebildet wird, die zur Stützung des INS 2 nötigen Stützgrößen berechnet und dem INS 2 zuführt.

Es ist ein Integritäts-Monitor 5 vorhanden, der erfindungsgemäß sowohl von dem GNSS 1, als auch von dem INS 2 mindestens die Systemausgangsgrößen Position und Geschwindigkeit erhält. Aufgrund des nachfolgend beschriebenen erfindungsgemäßen Verfahrens steuert der Integritätsmonitor 5 einen Schalter 6 an, der im Fehlerfall die Unterbrechung der Stützung des INS 2 bewirkt.

Die erfindungsgemäße Erhöhung der Meßredundanz der zur Verfügung stehenden Meßwerte wird beispielhaft mittels der Positionslösung des INS 2 für die Vertikalkomponente (hier $z_{in}$) und eine horizontale Komponente (hier $x_{in}$) beschrieben. Die Meßmatrix ergibt sich in diesem Fall zu:

$$\underline{G}'' = \begin{bmatrix} c_{11} & c_{12} & c_{13} & 1 \\ c_{21} & c_{22} & c_{23} & 1 \\ \vdots & \vdots & \vdots & \vdots \\ c_{n1} & c_{n2} & c_{n3} & 1 \\ \sigma_{sat}/\sigma_{x_{in}} & 0 & 0 & 0 \\ 0 & 0 & \sigma_{sat}/\sigma_{z_{in}} & 0 \end{bmatrix}.$$

Hiermit ergibt sich der Residuenvektor wie folgt zu:

$$\underline{w}'' = (\underline{y}_1 - \underline{y}^{\wedge}{}_1, \ \underline{y}_2 - \underline{y}^{\wedge}{}_2, \ ..., \ \underline{y}_n - \underline{y}^{\wedge}{}_n, \ (\underline{y}_{x_{in}} - \underline{y}^{\wedge}{}_x)/(\sigma_{x_{in}}/\sigma_{sat}), \ (\underline{y}_{z_{in}} - \underline{y}^{\wedge}{}_z)/(\sigma_{z_{in}}/$$

$$\sigma_{sat}))^{\mathsf{T}}$$

Hierbei gibt $\sigma_{sat}/\sigma_{x_{in}}$ das Verhältnis des Rauschens der Pseudo-Range-Messungen zum Rauschen der horizontalen x-Komponente des Inertialsystems, $\sigma_{sat}/\sigma_{z_{in}}$ das Verhältnis des Rauschens der Pseudo-Range-Messungen zum Rauschen der Vertikalkomponente des Inertialsystems, $\underline{y}_{x_{in}}$ und $\underline{y}_{z_{in}}$ die Differenzen zwischen inertialen und nominellen x-, bzw. z-Komponenten und $\underline{y}^{\wedge}{}_x$ und $\underline{y}^{\wedge}{}_z$ die durch das Verfahren der kleinsten Fehlerquadrate berechneten Fehler an.

Das erfindungsgemäße Verfahren ermöglicht natürlich auch die Einbeziehung anderer inertialer Komponenten oder eine Skalierung über andere Systemparameter als das Meßrauschen.

**Patentansprüche**

1. Verfahren zur Überprüfung der Zuverlässigkeit von nominellen Positionsbestimmungen aufgrund von Laufzeitmessungen, wobei die Meßredundanz der zur Fehlererkennung zur Verfügung stehenden Meßwerte mit Hilfe inertialer Systeme erhöht wird, **dadurch gekennzeichnet, daß** die Dimension der Meßmatrix ($\underline{G}$) des nominellen Systems auf Grundlage der Laufzeitmessungen mit Hilfe inertialer Systeme erhöht wird.

2. Verfahren nach Anspruch 1, **dadurch gekennzeichnet, daß** die inertiale Vertikal-Komponente ($z_{in}$) zur Erhöhung der Meßredundanz der Meßmatrix ($\underline{G}$) des nominellen Systems herangezogen wird.

3. Verfahren nach einem der Ansprüche 1 oder 2. **dadurch gekennzeichnet, daß** mindestens eine inertiale Horizontal-Komponente ($x_{in}$, $y_{in}$) zur Erhöhung der Meßredundanz der Meßmatrix ($\underline{G}$) des nominellen Systems herangezogen wird.

4. Verfahren nach einem der Ansprüche 1 bis 3, **dadurch gekennzeichnet, daß** das Verhältnis des Rauschens der nominellen Pseudo-Range Messungen ($\sigma_{sat}$) zum Rauschen einer inertialen Komponente ($\sigma_{x_{in}}$, $\sigma_{y_{in}}$, $\sigma_{z_{in}}$) in die Meßmatrix ($\underline{G}$) des nominellen Systems aufgenommen wird.

5. Verfahren nach einem der Ansprüche 1 bis 4, **dadurch gekennzeichnet, daß** die linearisierte n $\times$ 4 Meßmatrix ($\underline{G}$) des nominellen Systems zur einfachen Erhöhung der Dimension um eine Zeile erweitert wird, in der ein Element einen die inertiale Messung repräsentiernden Wert enthält.

6. Verfahren nach Anspruch 5, **dadurch gekennzeichnet, daß** der linearisierten n $\times$ 4 Meßmatrix ($\underline{G}$) des nominellen Systems eine Zeile bestehend aus den Elementen $\sigma_{sat}/\sigma_{x_{in}}$, 0, 0, 0 hinzugefügt wird, wobei $\sigma_{sat}$ das Rauschen der nominellen Pseudo-Range Messung und $\sigma_{x_{in}}$ das Rauschen der horizontalen x-Komponente der inertialen Messung ist.

7. Verfahren nach Anspruch 5 oder 6, **dadurch gekennzeichnet, daß** der linearisierten n $\times$ 4 Meßmatrix ($\underline{G}$) des nominellen Systems eine Zeile bestehend aus den Elementen 0, $\sigma_{sat}/\sigma_{y_{in}}$, 0, 0 hinzugefügt wird, wobei $\sigma_{sat}$ das Rauschen der nominellen Pseudo-Range Messung und $\sigma_{y_{in}}$ das Rauschen der horizontalen y-Komponente der inertialen Messung ist.

8. Verfahren nach einem der Ansprüche 5 bis 7. **dadurch gekennzeichnet, daß** der linearisierten n $\times$ 4 Meßmatrix ($\underline{G}$) des nominellen Systems eine Zeile bestehend aus den Elementen 0, 0, $\sigma_{sat}/\sigma_{z_{in}}$, 0 hinzugefügt wird. wobei $\sigma_{sat}$ das Rauschen der nominellen Pseudo-Range Messung und $\sigma_{z_{in}}$ das Rauschen der Vertikal-Komponente der inertialen Messung ist.

9. Verfahren nach einem der Ansprüche 1 bis 8, **dadurch gekennzeichnet, daß** die nominelle Positionsbestimmung mittels eines Satelliten-Navigationssystems durchgeführt wird.

10. Verfahren nach einem der Ansprüche 1 bis 9. **dadurch gekennzeichnet, daß** die n $\times$ 4 Meßmatrix ($\underline{G}$) des nominellen Systems vor der Erhöhung ihrer Dimension allgemein folgendes Aussehen hat:

$$\underline{G} = \begin{bmatrix} c_{11} & c_{12} & c_{13} & 1 \\ c_{21} & c_{22} & c_{23} & 1 \\ \vdots & \vdots & \vdots & \vdots \\ c_{n1} & c_{n2} & c_{n3} & 1 \end{bmatrix}.$$

11. Verfahren nach einem der Ansprüche 1 bis 10, **dadurch gekennzeichnet, daß** es als Instanz zur Fehlererkennung in einem hybriden Inertial/Satelliten-Navigationssystem eingesetzt wird.

**Claims**

1. Method for checking the reliability of nominal position findings on the basis of propagation time measurements, wherein the measurement redundancy of the measured values available for error identification is increased by means of inertial systems, **characterized in that** the inertial systems are used to increase the dimension of the measurement matrix ($\underline{G}$) of the nominal system on the basis of propagation time measurements.

2. Method according to Claim 1, **characterized in that** the inertial vertical component ($z_{in}$) is used to increase the measurement redundancy of the measurement matrix ($\underline{G}$) of the nominal system.

3. Method according to Claims 1 or 2, **characterized in that** at least one inertial horizontal component ($x_{in}$, $y_{in}$) is used to increase the measurement redundancy of the measurement matrix ($\underline{G}$) of the nominal system.

4. Method according to one of Claims 1 to 3, **characterized in that** the ratio of the noise in the nominal pseudo-range measurements ($\sigma_{sat}$) to the noise in an inertial component ($\sigma_{xin}$, $\sigma_{yin}$, $\sigma_{zin}$) is introduced into the measurement matrix ($\underline{G}$) of the nominal system.

5. Method according to one of Claims 1 to 4, **characterized in that** the linearized n x 4 measurement matrix ($\underline{G}$) of the nominal system is expanded by one line for a single increase of the dimension, in which line one element contains a value which represents the inertial measurement.

6. Method according to Claim 5, **characterized in that** a line comprising the elements $\sigma_{sat}/\sigma_{xin}$, 0, 0, 0 is added to the linearized n x 4 measurement matrix ($\underline{G}$) of the nominal system, $\sigma_{sat}$ being the noise in the nominal pseudo-range measurement and $\sigma_{xin}$ being the noise in the horizontal x-component of the inertial measurement.

7. Method according to Claim 5 or 6, **characterized in that** a line comprising the elements 0, $\sigma_{sat}/\sigma_{yin}$, 0, 0 is added to the linearized n x 4 measurement matrix ($\underline{G}$) of the nominal system, $\sigma_{sat}$ being the noise in the nominal pseudo-range measurement and $\sigma_{yin}$ being the noise in the horizontal y-component of the inertial measurement.

8. Method according to one of Claims 5 to 7, **characterized in that** a line comprising the elements 0, 0, $\sigma_{sat}/\sigma_{zin}$, 0 is added to the linearized n x 4 measurement matrix ($\underline{G}$) of the nominal system, $\sigma_{sat}$ being the noise in the nominal pseudo-range measurement and $\sigma_{zin}$ being the noise in the vertical component of the inertial measurement.

9. Method according to one of Claims 1 to 8, **characterized in that** the nominal position finding is carried out by means of a satellite navigation system.

10. Method according to one of Claims 2 to 9, **characterized in that** the n x 4 measurement matrix ($\underline{G}$) of the nominal system in general has the following appearance, before its dimension is increased:

$$\underline{G} = \begin{bmatrix} c_{11} & c_{12} & c_{13} & 1 \\ c_{21} & c_{22} & c_{23} & 1 \\ \cdot & \cdot & \cdot & \cdot \\ \cdot & \cdot & \cdot & \cdot \\ \cdot & \cdot & \cdot & \cdot \\ c_{n1} & c_{n2} & c_{n3} & 1 \end{bmatrix}$$

11. Method according to one of Claims 1 to 10, **characterized in that** said method is used as an instance for error identification in a hybrid inertial/satellite navigation system.

**Revendications**

1. Procédé pour contrôler la fiabilité d'intégrations de position nominales sur la base de mesures de temps de transit, la redondance de mesure des valeurs de mesure disponibles en vue de la détection d'erreur étant renforcée à l'aide de systèmes inertiels, **caractérisé en ce que** la dimension de la matrice de mesure ($\underline{G}$) du système nominal est accrue sur le fondement des mesures de temps de transit à l'aide de systèmes inertiels.

**2.** Procédé selon la revendication 1, **caractérisé en ce que** la composante verticale inertielle ($Z_{in}$) est mise à contribution pour renforcer la redondance de mesure de la matrice de mesure ($\underline{G}$) du système nominal.

**3.** Procédé selon l'une des revendications 1 ou 2, **caractérisé en ce qu'**au moins une composante horizontale inertielle ($X_{in}$, $Y_{in}$) est mise à contribution pour renforcer la redondance de mesure de la matrice de mesure ($\underline{G}$) du système nominal.

**4.** Procédé selon l'une des revendications 1 à 3, **caractérisé en ce que** le rapport du souffle des mesures nominales de la pseudo-gamme ($\sigma_{sat}$) au souffle d'une composante inertielle ($\sigma_{xin}$, $\sigma_{yin}$, $\sigma_{yin}$) est contenu dans la matrice de mesure ($\underline{G}$) du système nominal.

**5.** Procédé selon l'une des revendications 1 à 4, **caractérisé en ce que** la matrice de mesure ($\underline{G}$) linéarisée n x 4 du système nominal est, en vue d'un simple accroissement de la dimension, étendue d'une ligne, dans laquelle un élément contient une valeur représentant la mesure inertielle.

**6.** Procédé selon la revendication 5, **caractérisé en ce qu'**il est ajouté à la matrice de mesure ($\underline{G}$) linéarisée n x 4 du système nominal une ligne qui se compose des éléments $\sigma_{sat} / \sigma_{xin}$, 0, 0, 0, $\sigma_{sat}$ étant le souffle de la mesure de pseudo-gamme nominale et $\sigma_{xin}$ le souffle de la composante x horizontale de la mesure initiale.

**7.** Procédé selon la revendication 5 ou 6, **caractérisé en ce qu'**il est ajouté à la matrice de mesure ($\underline{G}$) linéarisée n x 4 du système nominal une ligne qui se compose des éléments 0, $\sigma_{sat} / \sigma_{yin}$, 0, 0, $\sigma_{sat}$ étant le souffle de la mesure de pseudo-gamme nominale et $\sigma_{yin}$ le souffle de la composante y horizontale de la mesure inertielle.

**8.** Procédé selon l'une des revendications 5 à 7, **caractérisé en ce qu'**il est ajouté à la matrice de mesure ($\underline{G}$) linéarisée n x 4 du système nominal une ligne qui se compose des éléments 0, 0, $\sigma_{sat} / \sigma_{zin}$, 0, $\sigma_{sat}$ étant le souffle de la mesure de pseudo-gamme nominale et $\sigma_{zin}$ le souffle de la composante verticale de la mesure inertielle.

**9.** Procédé selon l'une des revendications 1 à 8, **caractérisé en ce que** l'intégration de position nominale est effectuée au moyen d'un système de navigation par satellite.

**10.** Procédé selon l'une des revendications 1 à 9, **caractérisé en ce que** la matrice de mesure ($\underline{G}$) n x 4 du système nominal avant l'accroissement de sa dimension a généralement l'aspect suivant :

$$\underline{G} = \begin{bmatrix} C_{11} & C_{12} & C_{13} & 1 \\ C_{21} & C_{22} & C_{23} & 1 \\ \vdots & \vdots & \vdots & \vdots \\ C_{n1} & C_{n2} & C_{n3} & 1 \end{bmatrix}$$

**11.** Procédé selon l'une des revendications 1 à 10, **caractérisé en ce qu'**il est utilisé comme instance en vue de la détection d'erreur dans un système de navigation hybride inertiel / par satellite.

# Fig. 1

Systemausgangsgrößen: Position, Geschwindigkeit, Lage, etc.

INS

Stützgrößen

Integritäts-Monitor

GNSS

Kalman-Filter

Fehlergrößen

INS:    Inertial Navigation System
GNSS: Global Navigation Satellite System